# EUROPÄISCHE PATENTSCHRIFT

(11) **EP 0 673 762 B1**
(45) Veröffentlichungstag und Bekanntmachung des Hinweises auf die Patenterteilung: **02.06.2004**
(21) Anmeldenummer: 95101022.2
(22) Anmeldetag: 26.01.1995
(51) Int. Cl.: B32B 27/34, F16L 9/12, B32B 7/10, F16L 11/04

(54) **Mehrschichtiges Kunststoffrohr**
Multilayered plastic pipe
Tuyau multicouche en plastique

(30) Priorität: 24.03.1994 DE 4410148
(43) Veröffentlichungstag der Anmeldung: 27.09.1995
(73) Patentinhaber: Degussa AG, 40474 Düsseldorf (DE)
(72) Erfinder: Röber, Stefan, Dr., D-22453 Hamburg (DE); Jadamus, Hans, Dr., D-45768 Marl (DE); Ries, Hans, Dr., D-45772 Marl (DE)

(56) Entgegenhaltungen:
- EP-A- 0 637 511
- WO-A-94/25524
- DE-A- 19 504 616
- US-A- 4 563 393
- US-A- 5 342 666
- DATABASE WPI Week 9327 Derwent Publications Ltd., London, GB; AN 93-216246 XP002019459 & JP 05 138 820 A (DENKI KAGAKU KOGYO KK)
- DATABASE WPI Week 9414 Derwent Publications Ltd., London, GB; AN 94-114850 XP002019460 & JP 06 064 098 A (DENKI KAGAKU KOGYO KK)
- DATABASE WPI Week 9010 Derwent Publications Ltd., London, GB; AN 90-073050 XP002019461 & JP 02 028 239 A (DENKI KAGAKU KOGYO KK)
- DATABASE WPI Week 7827 Derwent Publications Ltd., London, GB; AN 78-48454a XP002019462 & JP 53 058 554 A (MITSUBISHI RAYON KK)

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium als auch beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile, wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395; 37 15 251; 38 21 723; 40 01 125; 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In FR-PS 2 602 515 wird ein zweischichtiges Rohr mit einer Außenschicht aus Polyamid 11 und einer inneren Schicht aus weichgemachtem Polyvinylidenfluorid beschrieben. Untersuchungen haben jedoch gezeigt, daß die Sperrwirkung gegenüber dem durchfließenden Medium nicht befriedigt. Darüber hinaus liegt als wesentlicher Nachteil kein kraftschlüssiger Verbund vor.

Vor allem die Permeation von methanolhaltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

In der nicht vorveröffentlichten deutschen Patentanmeldung P 43 26 130.2 werden thermoplastische Mehrschichtverbunde aus PVDF und Polyamid offenbart. Um einen kraftschlüssigen Verbund der Schichten untereinander zu erzielen, enthält das PVDF geringe Mengen eines Polyglutarimids. Mehrschichtrohre werden in dieser Schrift jedoch nicht explizit beschrieben.

Aufgabe der vorliegenden Erfindung war es, ein Polyamidrohr mit einer guten Sperrwirkung gegen das transportierte Medium, vor allem gegenüber methanolhaltigen Kraftstoffen, einer zufriedenstellenden Maßhaltigkeit, z. B. bei hohen und tiefen Temperaturen, sowie einer befriedigenden mechanischen Belastbarkeit zu entwickeln. Dabei sollte unbedingt ein kraftschlüssiger Verbund der Schichten untereinander vorliegen, ohne daß eine Haftvermittlerschicht verwendet wird. Selbstverständlich sollte dieser kraftschlüssige Verbund auch bei längerer Einwirkung des transportierten Mediums erhalten bleiben.

Diese Aufgabe wird gelöst durch ein mehrschichtiges Kunststoffrohr mindestens bestehend aus
I. einer Schicht auf Basis einer Formmasse aus Polyamid,
   und
II. einer zur Schicht I benachbarten Schicht auf Basis einer Formmasse aus einer Mischung aus
   a) 97,5 bis 50 Gew.-% Polyvinylidenfluorid
      und
   b) 2,5 bis 50 Gew.-% eines Acrylatcopolymers,
wobei die Schichten miteinander kraftschlüssig verbunden sind.

Die Komponenten II a und II b werden bevorzugt im Gewichtsverhältnis 97,5 bis 80 : 2,5 bis 20 und besonders bevorzugt 96 bis 90 : 4 bis 10 eingesetzt.

Für die Komponente I kommen in erster Linie aliphatische Homo- und Copolyamide in Frage. Als Beispiel seien die 4.6-, 6.6-, 6.12-, 8.10-, 10.10-Polyamide o. ä. genannt. Bevorzugt werden 6-, 10.12-, 11-, 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)methan, Trimethylhexamethylendiamin, Hexamethylendiamin o. ä. als Codiamin enthalten.

Die Herstellung dieser Polyamide ist bekannt (z. B.: D. B. Jacobs, J. Zimmermann, **Polymerization Processes,** S. 424 - 467; Interscience Publishers, New York (1977); DE-AS 21 52 194).

Ebenfalls geeignet als Polyamide sind gemischt aliphatische/aromatische Polykondensate wie sie z. B. in den US-PSS 2 071 250; 2 071 251, 2 130 523; 2 130 948; 2 241 322; 2 312 966; 2 512 606; 3 393 210 bzw. in Kirk-Othmer; **Encyclopedia of Chemical Technology**, 3. Aufl., Vol. 18, Wiley & Sons (1982), S. 328 und 435, beschrieben werden. Weitere als Polyamide geeignete Polykondensate sind Poly(etheresteramide) bzw. Poly(etheramide). Derartige Produkte werden z. B. in den DE-OSS 27 12 987, 25 23 991 und 30 06 961 beschrieben.

Es können sowohl Polyamide mit überwiegend Aminoendgruppen als auch solche mit überwiegend Carbonsäureendgruppen eingesetzt werden. Bevorzugt sind Polyamide mit überwiegend Aminoendgruppen.

Das Molekulargewicht (Zahlenmittel) der Polyamide liegt oberhalb von 4 000, vorzugsweise oberhalb von 10 000. Hierbei liegt die relative Viskosität (ηᵣₑₗ) im Bereich von 1,65 bis 2,4.

Die Polyamide können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycar bonates**, Interscience Publishers, New York (1981)], Acrylnitril/Styrol/Butadien- [Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284], Acrylnitril/Styrol/Acrylat- [**Ullmanns Encyclopädie der technischen Chemie,** 4. Auflage, Bd. 19, Verlag Chemie Weinheim (1981), S. 277 - 295], Acrylnitril/Styrol-Copolymerisate **[Ullmanns Encyclopädie der technischen Chemie,** 4. Auflage, Bd. 19, Verlag Chemie Weinheim (1981), S. 273 ff.] oder Polyphenylenether (DE-OSS 32 24 691 und 32 24 692, US-PSS 3 306 874, 3 306 875 u. 4 028 341) genannt.

Sofern erforderlich, können die Polyamide schlagzäh eingestellt werden. Geeignete Modifier sind z. B. Ethylen/Propylen- oder Ethylen/Propylen/Dien-Copolymere (EP-A-0 295 076), Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin können als schlagzähmachende Kautschuke Kern/Schale-Kautschuke mit einem zähelastischen Kern aus (Meth)Acrylat-, Butadien- oder Styrol/Butadien-Kautschuk mit Glastemperaturen T_{g} < -10 °C verwendet werden, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Komponente II a enthält Polyvinylidenfluorid, welches bevorzugt weichmacherfrei eingesetzt wird. Herstellung und Struktur des Polymeren sind bekannt (Hans R. Kricheldorf, **Handbook of Polymer Synthesis**, Part A, Verlag Marcel Dekker Inc. New York - Basel - Hongkong, S. 191 f.; **Kunststoff-Handbuch**, 1. Auflage, Band XI, Carl Hanser Verlag München (1971), S. 403 ff.).

Erfindungsgemäß können als Polyvinylidenfluorid auch Copolymere auf Basis von Vinylidenfluorid enthalten sein, die bis zu 40 Gew.-% andere Monomere aufweisen. Als solche zusätzlichen Monomere seien beispielhaft genannt: Trifluorethylen, Ethylen, Propen und Hexafluorpropen.

Das eingesetzte erfindungsgemäße Polyvinylidenfluorid weist in der Regel einen Melt Flow-Index von < 17 g/10 min, vorzugsweise von 2 bis 13 g/10 min (DIN 53 735) auf.

Als Komponente II b der Schicht II werden Acrylatcopolymere eingesetzt, welche mindestens die nachstehenden Grundbausteine aufweisen:
i) 14 bis 85 Gew.-%, vorzugsweise
   35 bis 70 Gew.- % 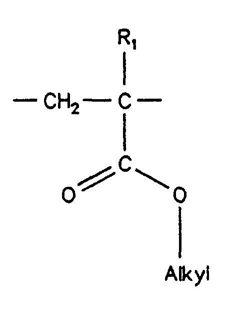
ii) 0 bis 75 Gew.-%, vorzugsweise
   10 bis 75 Gew.-% 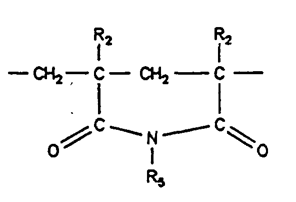
iii) 0 bis 15 Gew.-% 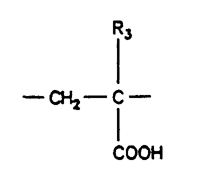
iiii) 7 bis 20 Gew.-%, vorzugsweise
   8 bis 12 Gew.-%

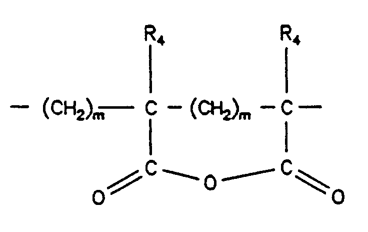

In den genannten Formeln bedeuten
Alkyl = Methyl, Ethyl, Propyl, Butyl, Pentyl, Hexyl
R₁ bis R₅ = H oder (CₙH₂ₙ₊₁) mit n = 1 bis 6
sowie m = 0 oder 1,
wobei die Reste R₁ bis R₅ gleich oder verschieden sein können. Bevorzugt sind solche Grundbausteine, in denen R₁ bis R₅ einen Methylrest bedeuten. Ebenso bedeutet Alkyl bevorzugt Methyl. Weiterhin hat m bevorzugt den Wert 1.

Die Acrylatcopolymere werden auf bekannte Weise durch Polymerisation der entsprechenden Monomeren hergestellt. Im Falle m = 0 und R₄ = H leitet sich der Grundbaustein iiii) beispielsweise von Maleinsäureanhydrid her, während im Falle m = 1 der Grundbaustein iiii) durch Verseifung zweier benachbarter Einheiten der Komponente i) und anschließenden Ringschluß entsteht.

In einer bevorzugten Ausführungsform liegt der Grundbaustein ii) zu 10 bis 75 Gew.-% und besonders bevorzugt zu 20 bis 40 Gew.-% vor. Derartige Polymeren werden auch als Polyglutarimide bezeichnet. Es handelt sich hierbei um Polyalkylacrylsäureester, bei denen zwei benachbarte Carboxylatgruppen zu einem cyclischen Säureimid umgesetzt worden sind. Die Imidbildung wird bevorzugt mit Ammoniak bzw. primären Aminen, wie z. B. Methylamin, durchgeführt. Wegen der Anwesenheit von Wasser bei der Imidbildungsreaktion wird hierbei ein Teil der Grundbausteine i) zu den Grundbausteinen iii) und iiii) verseift. Die Produkte sowie ihre Herstellung sind bekannt (Hans R. Kricheldorf, **Handbook of Polymer Synthesis**, Part A, Verlag Marcel Dekker Inc. New York - Basel - Hongkong, S. 223 f.; H. G. Elias, **Makromoleküle**, Hüthig und Wepf Verlag Basel - Heidelberg - New York; US-PSS 2 146 209, 4 246 374).

Die erfindungsgemäß eingesetzten Acrylatcopolymere weisen in der Regel einen Melt Flow-Index von < 30 g/10 min, vorzugsweise von 0,2 bis 15 g/10 min, auf.

Zur Erhöhung der Kälteschlagzähigkeit können die Acrylatcopolymere noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind weitere Modifier möglich.

Den Formmassen für die Schichten I und II können übliche Hilfs- und Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der elektrischen Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der Formmasse für die Schicht gemäß II erfolgt nach den üblichen und bekannten Verfahren durch Schmelzemischen der Komponenten II a und II b in einem gut knetenden Mischaggregat, wie z. B. einem Doppelschneckenkneter, bei Temperaturen, die sich nach den Schmelzpunkten der Komponente II a und II b richten, im allgemeinen bei Temperaturen zwischen 200 und 300 °C.

Die Herstellung der Komponente II aus den Komponenten II a und II b kann auch direkt im Aufbereitungsextruder erfolgen, in dem die Komponente II für die Herstellung des thermoplastischen Mehrschichtverbundes mit der Schicht I aufbereitet wird.

Die Forderung nach möglichst hoher Sperrwirkung gegenüber dem transportierten Medium läßt sich um so besser erfüllen, je kleiner der Gehalt an Komponente II b in der Formmasse für die Schicht II ist. Beispielsweise ist die Sperrwirkung gegen methanolhaltige Kraftstoffe von Mischungen aus 95 Gew.-% Polyvinylidenfluoridpolymeren (Komponente II a) und 5 Gew.-% eines erfindungsgemäßen Acrylatcopolymers (Komponente II b) nur unwesentlich schlechter als die Sperrwirkung von reinem Polyvinylidenfluorid.

Die mehrschichtigen Rohre können zusätzlich weitere Schichten aus Polyvinylidenfluoridpolymeren enthalten, die zur Schicht II, nicht aber zur Schicht I benachbart sind. Ebenso können die mehrschichtigen Rohre weitere Schichten aus Polyamid enthalten, die zur Schicht I oder zur Schicht II benachbart sind.

Insbesondere können die Rohre weitere Schichten I und/oder II enthalten, die elektrisch leitfähig eingestellt sind und einen Oberflächenwiderstand kleiner als 10⁹ Ω aufweisen. Diese elektrisch leitfähig eingestellten Schichten werden bevorzugt innenliegend eingesetzt.

Eine weitere Ausführungsform besteht darin, daß die Schicht II selbst elektrisch leitfähig eingestellt ist.

Die Einstellung der elektrischen Leitfähigkeit erfolgt nach bekannten Methoden. Beispielsweise setzt man bis zu etwa 15 Gew.-% von z. B. Leitfähigkeitsruß, Kohlenstoffasern o. ä. zu.

Die erfindungsgemäßen mehrschichtigen Rohre können auch derart aufgebaut sein, daß zusätzlich zu den Schichten I und II
a) mindestens eine Schicht auf Basis eines Polyolefins und
b) mindestens eine Schicht auf Basis eines üblichen Haftvermittlers für Verbunde zwischen Polyolefin und Polyamid enthalten ist,
wobei die Haftvermittlerschicht direkt zwischen der Schicht I und der Schicht auf Basis eines Polyolefins liegt.

Beispielhaft für Polyolefine seien Polyethylen und Polypropylen genannt. Grundsätzlich kann hiervon jeder handelsübliche Typ eingesetzt werden. So kommen beispielsweise infrage: lineares Polyethylen hoher, mittlerer oder niedriger Dichte, LDPE, Ethylencopolymere mit kleineren Mengen (bis maximal circa 40 Gew.-%) an Comonomeren wie n-Butylacrylat, Methylmethacrylat, Maleinsäureanhydrid, Styrol, Vinylalkohol o. ä., isotaktisches oder ataktisches Homopolypropylen, Randomcopolymere von Propen mit Ethen und/oder Buten-1, Ethylen-Propylen-Blockcopolymere und dergleichen mehr. Derartige Polyolefine können auch eine Schlagzähkomponente wie z. B. EPM- oder EPDM-Kautschuk oder SEBS enthalten.

Geeignete Haftvermittler für Verbunde zwischen Polyolefin und Polyamid sind bekannt. Sie bestehen aus einer Polyolefinbasis, die mit geeigneten reaktiven Gruppen modifiziert ist. Die reaktiven Gruppen können hierbei entweder durch Copolymerisation zusammen mit dem Olefin oder durch eine Pfropfreaktion eingebracht werden. Bei der Pfropfreaktion wird ein vorgebildetes Polyolefin auf bekannte Weise mit einem ungesättigten, funktionellen Monomeren und vorteilhafterweise einem Radikalspender bei erhöhter Temperatur umgesetzt.

Als reaktive Gruppen geeignet sind z. B. Säureanhydridgruppen, Carbonsäuregruppen, Epoxidgruppen, Oxazolingruppen oder Trialkoxysilangruppen. Hiervon werden bevorzugt Säureanhydridgruppen verwendet. Besonders geeignet sind Haftvermittler mit mehr als 0,1 Gew.-% Anhydridgruppen.

Geeignete Haftvermittler sind erhältlich u. a. unter den Handelsnamen BYNEL (DuPont), PRIMACOR (Dow), POLYBOND (BP), OREVAC (Elf), HERCOPRIME (Hercules), EPOLENE (Eastman), HOSTAMONT (Hoechst), EXXELOR (Exxon) und ADMER (Mitsui Petrochemical). Die Auswahl der Haftvermittler erfolgt nach den Kriterien, die dem Fachmann anhand der entsprechenden Produktbeschreibungen bekannt sind. In den erfindungsgemäßen mehrschichtigen Rohren sind alle benachbarten Schichten kraftschlüssig miteinander verbunden.

Die Tabelle 1 zeigt einige Beispiele für Schichtenanordnungen von erfindungsgemäßen mehrschichtigen Kunststoffrohren.

In einer bevorzugten Ausführungsform werden die Schichten so angeordnet und die Dicke der Schichten so gewählt, daß die Schichten gemäß II möglichst in der Mitte der mehrschichtigen Rohrwand liegen. Durch diese Maßnahme wird die Kälteschlagzähigkeit der mehrschichtigen Rohre verbessert.

Weiterhin wird die Dicke der Schicht II so gewählt, daß sie 2 bis 40 % der Gesamtwandstärke und insbesondere 5 bis 30 % der Gesamtwandstärke ausmacht.

Die Fertigung der mehrschichtigen Kunststoffrohre kann beispielsweise durch Coextrusion erfolgen.

Die erfindungsgemäßen, mehrschichtigen Kunststoffrohre weisen in hervorragendem Maße eine gute Beständigkeit sowie Sperrwirkung gegen Diffusion gegenüber chemischen Agenzien, Lösemitteln und Kraftstoffen auf. Ferner sind die Schichten kraftschlüssig miteinander verbunden, so daß z. B. bei thermischer Ausdehnung, Biegen oder Thermoformen des mehrschichtigen Rohres kein Abscheren der verschiedenen Schichten voneinander auftritt. Diese gute Schichtenhaftung bleibt auch bei längerem Kontakt mit Kraftstoffen, insbesondere auch methanolhaltigen Kraftstoffen, erhalten.

**Tabelle 1:**

| Schichtenanordnung von erfindungsgemäßen, mehrschichtigen Kunststoffrohren (Aufbau von außen nach innen) | |
|---|---|
| Schichtenanordnung Nr. | Ausführung |
| 1 | Schicht I |
| | Schicht II |
| 2 | Schicht I |
| | Schicht II (leitfähig) |
| 3 | Schicht I |
| | Schicht II |
| | Schicht I |
| 4 | Schicht I |
| | Schicht II |
| | Schicht I (leitfähig) |
| 5 | Schicht I |
| | Schicht II |
| | Schicht I |
| | Schicht II |
| | Schicht I |
| 6 | Schicht I |
| | Schicht II |
| | Schicht I |
| | Schicht II (leitfähig) |
| 7 | Schicht I |
| | Schicht II |
| | Schicht I |
| | Schicht II |
| | Schicht I (leitfähig) |
| 8 | Schicht I |
| | Schicht II |
| | Schicht aus Polyvinyliden- |
| | fluoridcopolymeren |
| 9 | Schicht I |
| | Schicht II |
| | Schicht aus Polyvinyliden- |
| | fluoridcopolymeren (leitfähig) |
| 10 | Schicht I |
| | Schicht I (anderer Polyamidtyp) |
| | Schicht II |
| 11 | Schicht II |
| | Schicht I |
| 12 | Schicht aus Polyolefin |
| | Schicht aus Haftvermittler |
| | Schicht I |
| | Schicht II |

Bevorzugt eingesetzt werden die erfindungsgemäßen Kunststoffrohre zum Transport (petro)chemischer Stoffe bzw. im Kraftfahrtsektor zum Durchleiten von Brems-, Kühl- und Hydraulikflüssigkeiten sowie Kraftstoff, insbesondere auch methanol- oder ethanolhaltigem Kraftstoff. Eine weitere Verwendung der mehrschichtigen Rohre besteht darin, daß aus ihnen Hohlkörper wie Tankbehälter oder Einfüllstützen, insbesondere für den Kraftfahrzeugsektor, hergestellt werden. Die Herstellung dieser Hohlkörper erfolgt beispielsweise durch einen der Coextrusion nachgeschalteten Blasformprozeß.

Die genannten Parameter wurden mit Hilfe nachstehender Meßverfahren bestimmt.

Die **Bestimmung der Lösungsviskosität** (rel. Viskosität ηᵣₑₗ) **der Polyamide** erfolgt unter Verwendung einer 0,5 gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in den Polyamiden wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/l) gegen Phenolphthalein bis zum Farbumschlag titriert.

Die **Bestimmung des Melt Flow-Index der Acrylatcopolymere** erfolgt bei 230 °C und unter einer Belastung von 3,8 kg (DIN 53 735).

Die **Bestimmung des Melt Flow-Index der Polyvinylidenfluoride** erfolgt bei 230 °C und unter einer Belastung von 5 kg (DIN 53 735).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Diffusion** von Kraftstoffanteilen erfolgt an Rohren mit einem Kraftstoffgemisch (Kraftstoff M 15: 42,5 Vol.-Tle. Isooctan, 42,5 Vol.-Tle. Toluol und 15 Vol.-Tle. Methanol) bei 60 °C. Die Proben mit der Länge von 500 mm werden mit dem Kraftstoffgemisch innenseitig durchspült. Die Bestimmung der Kraftstoffdiffusion erfolgt nach dem Aktivkohle-Adsorptionsverfahren. Die Diffusion wird als Masseverlust über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß.

### Beispiele

### Komponente I

- PA 1:: Polyamid 12 (ηᵣₑₗ: 2,1; Weichmachergehalt: 0; Aminoendgruppengehalt: 9 mmol/kg; Carboxylendgruppengehalt: 48 mmol/kg; VESTAMID® L 2140 - HÜLS AG)
- PA 2:: Polyamid 12 (ηᵣₑₗ: 2,1; Weichmachergehalt auf 100 Gew.-Tle. Polyamid: 15 Gew.-Tle. N-n-Butylbenzolsulfonamid; Aminoendgruppengehalt: 9 mmol/kg; Carboxylendgruppengehalt: 48 mmol/kg; VESTAMID® L 2124 - HÜLS AG)
- PA 3:: Polyamid 12 (ηᵣₑₗ: 2,1; Weichmachergehalt auf 100 Gew.-Tle. Polyamid: 15 Gew.-Tle. N-n-Butylbenzolsulfonamid; Aminoendgruppengehalt: 50 mmol/kg; Carboxylendgruppengehalt: 8 mmol/kg)
- PA 4:: Polyamid 612 (ηᵣₑₗ: 1,9; Weichmachergehalt: 0; Aminoendgruppengehalt: 93 mmol/kg; Carboxylendgruppengehalt: 29 mmol/kg)
- PA 5:: Formmasse, bestehend aus
a. 100 Gew.-Tln. Polyamid 12 (ηᵣₑₗ: 2,1; Weichmachergehalt: 0; Aminodgruppengehalt: 9 mmol/kg; Carboxylendgruppengehalt: 48 mmol/kg)
   und
b. 4 Gew.-Tln. handelsüblichem Leitfähigkeitsruß (Ketjenblack® EC 300 - AKZ0)

### Komponente II

- PVDF 1:: Polyvinylidenfluorid (Melt Flow Index: 13 g/10 min, DYFLOR® LE - HÜLS AG).
- PVDF 2:: Polyvinylidenfluorid (Melt Flow Index: 8,5 g/10 min, DYFLOR® EE - HÜLS AG).
- PVDF 3:: Polyvinylidenfluorid bestehend aus
a) 100 Gew.-Tln. Polyvinylidenfluorid (Melt Flow Index: 8,5 g/10 min, DYFLOR® EE - HÜLS AG)
   und
b) 6 Gew.-Tln. handelsüblichem Leitfähigkeitsruß (Ketjenblack® EC 300 - AKZ0).

Die für die Komponente II b eingesetzen Polymeren sind aus den weiter oben mit i) bis iiii) gekennzeichneten Bausteinen aufgebaut, wobei Alkyl und R₁ bis R₅ jeweils Methyl sowie m die Zahl 1 bedeuten.

| | P 1 | P 2 | P 3 | P 4 |
|---|---|---|---|---|
| Gew.-% i) | 100 | 14 | 11 | 57 |
| Gew.-% ii) | 0 | 86 | 80 | 30 |
| Gew.-% iii) | 0 | 0 | 6 | 3 |
| Gew.-% iiii) | 0 | 0 | 3 | 10 |
| Melt-Flow-Index [g/10 min] | 0,8 | 0,4 | 0,4 | 0,4 |

- Z1:: Mischung bestehend aus
a) 50 Gew. - % PVDF 1
   und
b) 50 Gew.-% P1
- Z2:: Mischung bestehend aus
a) 50 Gew.-% PVDF 1
   und
b) 50 Gew.-% P2.
- Z3:: Mischung bestehend aus
a) 50 Gew.-% PVDF 1
   und
b) 50 Gew.-% P3.
- Z4:: Mischung bestehend aus
a) 50 Gew.-% PVDF 1
   und
b) 50 Gew.-% P4.
- Z5:: Mischung bestehend aus
a) 90 Gew.-% PVDF 1
   und
b) 10 Gew.-% P4.
- Z6:: Mischung bestehend aus
a) 95 Gew.-% PVDF 2
   und
b) 5 Gew.-% P4.
- Z7:: Mischung bestehend aus
a) 90 Gew.-% PVDF 3
   und
b) 10 Gew.-% P4.

Die Herstellung der Mischungen erfolgte in einem Zweischneckenkneter bei einer Massetemperatur von 260 °C.

### Herstellung der mehrschichtigen Rohre gemäß den Beispielen 1 bis 12 und Vergleichsbeispielen A bis G (siehe Tabelle)

Die Rohre wurden auf einer Laborextrusionsanlage mit einem Fünfschichtwerkzeug hergestellt (bei der Herstellung der Zwei-, Drei- und Vierschichtrohre bleiben die nicht benötigten Kanäle geschlossen). Die Zylindertemperaturen lagen bei 230 °C (PA 1, PA 2, PA 3); 250 °C (PVDF 1, PVDF 2, PVDF 3, Z 1 bis Z 7) und 280 °C (PA 4, PA 5).

Es wurden Rohre mit 8 mm Außendurchmesser und einer Gesamtwandstärke von 1 mm hergestellt.

**Tabelle 2:**

| Nicht erfindungsgemäße Versuche | | | | |
|---|---|---|---|---|
| Versuch | Schichtaufbau von außen nach innen | Diffusion [g/(d m²)] bei 60 °C | An den Grenzflächen mechanisch trennbar | |
| | | | nach Lagerung bei 23 °C | nach Lagerung in Kraftstoff*) |
| A | PA 1 (1,0 mm) | 600 | ***) | ***) |
| | (Einschichtrohr) | | | |
| B | PA 2 (1,0 mm) | 410 | ***) | ***) |
| | (Einschichtrohr) | | | |
| C | PA 1 (0,9 mm) | 30 | ja | ja |
| | PVDF 1 (0,1 mm) | | | |
| D | PA 2 (0,9 mm) | **) | ja | ja |
| | Z 1 (0,1 mm) | | | |
| E | PA 2 (0,8 mm) | 30 | ja | ja |
| | Z 1 (0,1 mm) | | (PA 2 von | (PA 2 von |
| | PVDF 1 (0,1 mm) | | Z 1) | Z 1) |
| F | PA 3 (0,9 mm) | **) | ja | ja |
| | Z 2 (0,1 mm) | | | |
| G | PA 4 (0,9mm) | **) | ja | ja |
| | Z 3 (0,1 mm) | | | |

| | | | | |
|---|---|---|---|---|
| *) Lagerung bei 23 °C während 20 Tagen in Normkraftstoff M 15 (42,5 Vol.-% Isooctan, 42,5 Vol.-% Toluol und 15 Vol.-% Methanol) | | | | |
| **) Diffusion wurde nicht bestimmt. | | | | |
| ***) Einschichtrohr; es gibt keine Grenzfläche. | | | | |

**Tabelle 3:**

| Erfindungsgemäße Versuche | | | | |
|---|---|---|---|---|
| Versuch | Schichtaufbau von außen nach innen | Diffusion [g/(d m²)] bei 60 °C | An den Grenzflächen mechanisch trennbar | |
| | | | nach Lagerung bei 23 °C | nach Lagerung in Kraftstoff*) |
| 1 | PA 1 (0,8 mm) | 40 | nein | nein |
| | Z 5 (0,2 mm) | | | |
| 2 | PA 1 (0,9 mm) | 60 | nein | nein |
| | Z 6 (0,1 mm) | | | |
| 3 | PA 2 (0,8 mm) | < 30 | nein | nein |
| | Z 6 (0,1 mm) | | | |
| | PVDF 1 (0,1 mm) | | | |
| 4 | PA 2 (0,8 mm) | 50 | nein | nein |
| | Z 6 (0,1 mm) | | | |
| | PVDF 3 (0,05 mm) | | | |
| 5 | PA 3 (0,9 mm) | 75 | nein | nein |
| | Z 7 (0,1 mm) | | | |
| 6 | PA 4 (0,8 mm) | < 35 | nein | nein |
| | Z 4 (0,1 mm) | | | |
| | PVDF 2 (0,1 mm) | | | |
| 7 | PA 2 (0,45 mm) | 60 | nein | nein |
| | Z 6 (0,1 mm) | | | |
| | PA 2 (0,45 mm) | | | |
| 8 | PA 2 (0,45 mm) | < 60 | nein | nein |
| | Z 6 (0,1 mm) | | | |
| | PA 3 (0,4 mm) | | | |
| | Z 7 (0,05 mm) | | | |
| 9 | PA 1 (0,8 mm) | 70 | nein | nein |
| | Z 5 (0,1 mm) | | | |
| | PA 5 (0,1 mm) | | | |
| 10 | PA 2 (0,3 mm) | < 60 | nein | nein |
| | Z 6 (0,05 mm) | | | |
| | PA 2 (0,3 mm) | | | |
| | Z 6 (0,05 mm) | | | |
| | PA 2 (0,3 mm) | | | |
| 11 | PA 1 (0,5 mm) | 65 | nein | nein |
| | Z 5 (0,05 mm) | | | |
| | PA 1 (0,3 mm) | | | |
| | Z 5 (0,05 mm) | | | |
| | PA 5 (0,1 mm) | | | |
| 12 | Z 6 (0,2 mm) | 60 | nein | nein |
| | PA 3 (0,8 mm) | | | |

| | | | | |
|---|---|---|---|---|
| *) Lagerung bei 23 °C während 20 Tagen in Normkraftstoff M 15 (42,5 Vol.-% Isooctan, 42,5 Vol.-% Toluol und 15 Vol.-% Methanol) | | | | |

## Patentansprüche

1. Mehrschichtiges Kunststoffrohr, das mindestens aus folgenden Schichten besteht:
I. Einer Schicht auf Basis einer Formmasse aus Polyamid
und
II. einer zu I benachbarten Schicht auf Basis einer Formmasse aus einer Mischung aus
a) 97,5 bis 50 Gew.-% Polyvinylidenfluorid
und
b) 2,5 bis 50 Gew.-% Acrylatcopolymer,
wobei die Schichten miteinander fest verbunden sind und das Acrylatcopolymer der Komponente 11 b mindestens die nachstehenden Grundbausteine aufweist:
i) 14 bis 85 Gew.-% 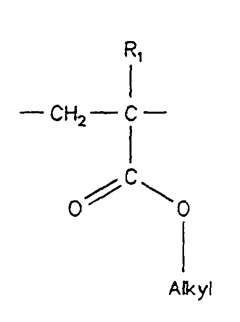
ii) 0 bis 75 Gew.-% 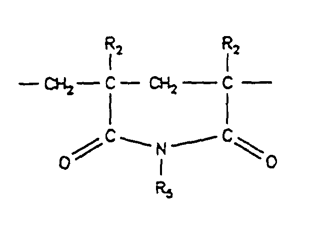
iii) 0 bis 15 Gew.-% 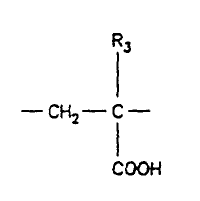
iiii) 7 bis 20 Gew.-% 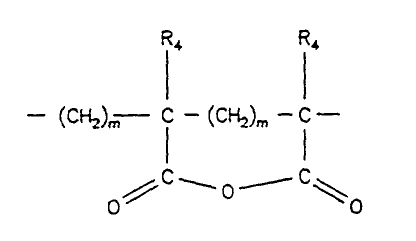
wobei m = 0 oder 1, Alkyl = Methyl, Ethyl, Propyl, Butyl, Pentyl, Hexyl und R₁ bis R₅ = H oder (CₙH₂ₙ₊₁) mit n = 1 bis 6 bedeuten und gleich oder verschieden sein können
**dadurch gekennzeichnet, daß**
a) die Dicke der Schicht II so gewählt wird, daß sie 2 bis 40 % der Gesamtwandstärke ausmacht und
b) das Polyamid der Schicht I eine relative Viskosität ηᵣₑₗ, im Bereich von 1,65 bis 2,4 besitzt.

2. Mehrschichtiges Kunststoffrohr gemäß Anspruch 1,
**dadurch gekennzeichnet,**
**daß** die Schicht II aus einer Formmasse aus einer Mischung aus
a) 97,5 bis 80 Gew.-% Polyvinylidenfluorid
und
b) 2,5 bis 20 Gew.-% Acrylatcopolymer
besteht,

3. Mehrschichtiges Kunststoffrohr gemäß den Ansprüchen 1 oder 2,
**dadurch gekennzeichnet,**
**daß** die Schicht II aus einer Formmasse aus einer Mischung aus
a) 96 bis 90 Gew.-% Polyvinylidenfluorid
und
b) 4 bis 10 Gew.-% Acrylatcopolymer
besteht.

4. Mehrschichtiges Kunststoffrohr gemäß einem der Ansprüche 1 bis 3,
**dadurch gekennzeichnet,**
**daß** die Komponente II b nachstehende Grundbausteine aufweist:
i) 35 bis 70 Gew.-% 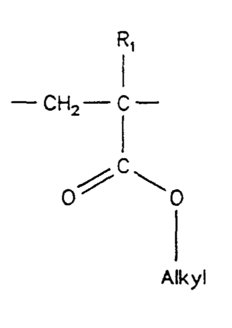
ii) 10 bis 75 Gew.-%, vorzugsweise
20 bis 40 Gew.-% 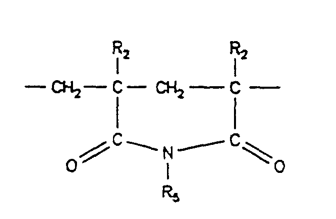
iii) 0 bis 15 Gew.-% 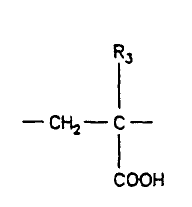
iiii) 8 bis 12 Gew.-% 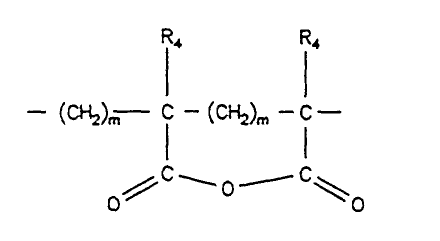
wobei m = 0 oder bevorzugt 1, Alkyl = Methyl, Ethyl, Propyl, Butyl, Pentyl, Hexyl und R₁ bis R₅ = H oder (CₙH₂ₙ₊₁) mit n = 1 bis 6 bedeuten und gleich oder verschieden sein können.

5. Mehrschichtiges Kunststoffrohr gemäß einem der Ansprüche 1 bis 4,
**dadurch gekennzeichnet,**
**daß** die Schicht gemäß I eine Formmasse auf Basis von Polyamid 12 darstellt.

6. Mehrschichtiges Kunststoffrohr gemäß einem der Ansprüche 1 bis 5,
**dadurch gekennzeichnet,**
**daß** Alkyl sowie R₁ bis R₅ eine Methylgruppe darstellen.

7. Mehrschichtiges Kunststoffrohr gemäß einem der Ansprüche 1 bis 6,
**dadurch gekennzeichnet,**
**daß** die Komponente II a ein Vinylidenfluoridcopolymeres enthält.

8. Mehrschichtiges Kunststoffrohr gemäß einem der Ansprüche 1 bis 7,
**dadurch gekennzeichnet,**
**daß** die Schicht I oder die Schicht II elektrisch leitfähig eingestellt ist und einen Oberflächenwiderstand kleiner als 10⁹ Ω aufweist.

9. Mehrschichtiges Kunststoffrohr gemäß einem der Ansprüche 1 bis 8,
**dadurch gekennzeichnet,**
**daß** die Komponente II a ein Polyvinylidenfluorid mit einem Melt Flow-Index von kleiner als 17 g/10 min und bevorzugt ein Polyvinylidenfluorid mit einem Melt Flow-Index von 2 bis 13 g/10 min enthält.

10. Mehrschichtiges Kunststoffrohr gemäß einem der Ansprüche 1 bis 9,
**dadurch gekennzeichnet,**
**daß** es mehr als eine Schicht I und/oder daß es mehr als eine Schicht II enthält.

11. Mehrschichtiges Kunststoffrohr gemäß einem der Ansprüche 1 bis 10,
**dadurch gekennzeichnet,**
**daß** es weitere Schichten aus Polyvinylidenfluorid enthält, die zur Schicht II, aber nicht zur Schicht I benachbart sind.

12. Mehrschichtiges Kunststoffrohr gemäß Anspruch 11,
**dadurch gekennzeichnet,**
**daß** die weiteren Schichten aus Polyvinylidenfluorid elektrisch leitfähig eingestellt sind und einen Oberflächenwiderstand von kleiner als 10⁹ Ω aufweisen.

13. Mehrschichtiges Kunststoffrohr gemäß einem der Ansprüche 1 bis 12,
**dadurch gekennzeichnet,**
**daß** die innenliegende Schicht elektrisch leitfähig eingestellt ist und einen Oberflächenwiderstand von kleiner als 10 ⁹ Ω aufweist.

14. Mehrschichtiges Kunststoffrohr gemäß einem der Ansprüche 1 bis 13,
**dadurch gekennzeichnet,**
**daß** es zusätzlich zu den Schichten I und II
a. mindestens eine Schicht auf Basis eines Polyolefins
und
b. mindestens eine Schicht auf Basis eines üblichen Haftvermittlers für Verbunde zwischen Polyolefin und Polyamid enthält,
so angeordnet, daß die Schicht auf Basis des Haftvermittlers (b) direkt zwischen der Schicht I und der Schicht auf Basis des Polyolefins (a) liegt.

15. Verwendung des mehrschichtigen Kunststoffrohres gemäß einem der Ansprüche 1 bis 14 für den Transport (petro)chemischer Stoffe.

16. Verwendung des mehrschichtigen Kunststoffrohres gemäß einem der Ansprüche 1 bis 14 zur Herstellung von Hohlkörpern.

17. Mehrschichtiges Kunststoffrohr gemäß einem der Ansprüche 1 bis 14,
**dadurch gekennzeichnet,**
**daß** es eine Leitung für Brems-, Kühl- oder Hydraulikflüssigkeit oder für Kraftstoff ist.

18. Mehrschichtiges Kunststoffteil, hergestellt aus einem mehrschichtigen Kunststoffrohr gemäß einem der Ansprüche 1 bis 14,
**dadurch gekennzeichnet,**
**daß** es ein Einfüllstutzen oder ein Tankbehälter ist.

## Claims

1. A multilayer plastic pipe
which comprises at least the following layers:
I. a layer based on a moulding composition of polyamide,
and
II. a layer adjacent to layer I and based on a moulding composition comprising a mixture of
a) from 97.5 to 50% by weight of polyvinylidene fluoride
and
b) from 2.5 to 50% by weight of an acrylate copolymer,
with the layers being firmly joined to one another and the acrylate copolymer of the component II b containing at least the following basic building blocks:
i) from 14 to 85% by weight of 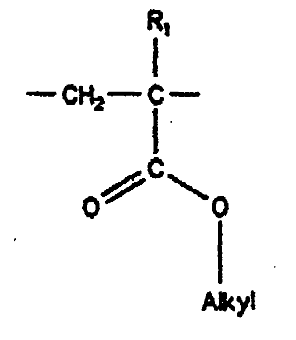
ii) from 0 to 75% by weight of 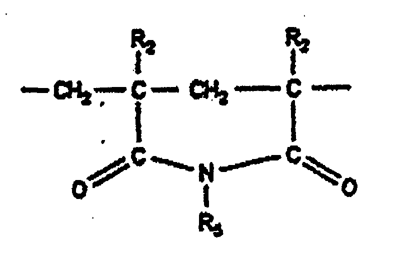
iii) from 0 to 15% by weight of 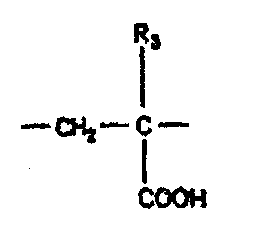
iiii) from 7 to 20% by weight of 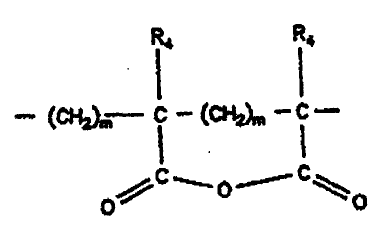
where m = 0 or 1, Alkyl = methyl, ethyl, propyl, butyl. pentyl, hexyl and R₁ to R₅ = H or (CₙH₂ₙ₊₁) with n = 1 to 6 and can be identical or different, **characterized in that**
a) the thickness of the layer II is chosen such that it makes up from 2 to 40% of the total wall thickness and
b) the polyamide of the layer I has a relative viscosity ηᵣₑₗ in the range from 1.65 to 2.4.

2. A multilayer plastic pipe according to claim 1,
**characterized in that** the layer II comprises a moulding composition of a mixture comprising
a) from 97.5 to 80% by weight of polyvinylidene fluoride
and
b) from 2.5 to 20% by weight of acrylate copolymer.

3. A multilayer plastic pipe according to claim 1 or 2,
**characterized in that** the layer II comprises a moulding composition of a mixture comprising
a) from 96 to 90% by weight of polyvinylidene fluoride
and
b) from 4 to 10% by weight of acrylate copolymer.

4. A multilayer plastic pipe according to any one of claims 1 to 3,
**characterized in that** the component II b contains the following basic building blocks:
i) from 35 to 70% by weight of 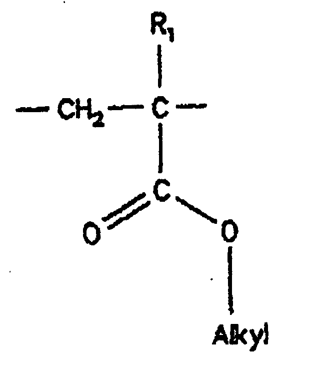
ii) from 10 to 75% by weight, preferably from 20 to 40% by weight, of 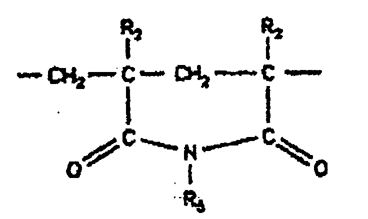
iii) from 0 to 15% by weight of 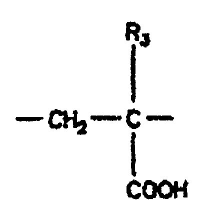
iiii) from 8 to 12% by weight of 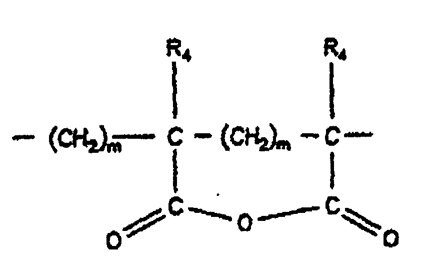
where m = 0 or preferably 1, Alkyl = methyl, ethyl, propyl, butyl, pentyl, hexyl and R₁ to R₅ = H or (CₙH₂ₙ₊₁) with n = 1 to 6 and can be identical or different.

5. A multilayer plastic pipe according to any one of claims 1 to 4,
**characterized in that** the layer I comprises a moulding composition based on polyamide 12.

6. A multilayer plastic pipe according to any one of claims 1 to 5,
**characterized in that** both Alkyl and R₁ to R₅ are methyl groups.

7. A multilayer plastic pipe according to any one of claims 1 to 6,
**characterized in that** the component II a contains a vinylidene fluoride copolymer.

8. A multilayer plastic pipe according to any one of claims 1 to 7,
**characterized in that** the layer I or the layer II has been made electrically conductive and has a surface resistance of less than 10⁹ Ω.

9. A multilayer plastic pipe according to any one of claims 1 to 8,
**characterized in that** the component II a contains a polyvinylidene fluoride having a melt flow index of less than 17 g/10 min and preferably contains a polyvinylidene fluoride having a melt flow index of from 2 to 13 g/10 min.

10. A multilayer plastic pipe according to any one of claims 1 to 9,
**characterized in that** it contains more than one layer I and/or it contains more than one layer II.

11. A multilayer plastic pipe according to any one of claims 1 to 10,
**characterized in that** it contains further layers comprising polyvinylidene fluoride which are adjacent to layer II, but not to layer I.

12. A multilayer plastic pipe according to claim 11,
**characterized in that** the further layers comprising polyvinylidene fluoride have been made electrically conductive and have a surface resistance of less than 10⁹ Ω.

13. A multilayer plastic pipe according to any one of claims 1 to 12,
**characterized in that** the innermost layer has been made electrically conductive and has a surface resistance of less than 10⁹ Ω.

14. A multilayer plastic pipe according to any one of claims 1 to 13,
**characterized in that**, in addition to the layers I and II, it contains
a. at least one layer based on a polyolefin
and
b. at least one layer based on a conventional coupling agent for bonds between polyolefin and polyamide,
arranged in such a way that the layer based on the coupling agent (b) lies directly between the layer I and the layer based on the polyolefin (a).

15. The use of the multilayer plastic pipe according to any one of claims 1 to 14 for the transport of (petro)-chemical materials.

16. The use of the multilayer plastic pipe according to any one of claims 1 to 14 for manufacturing hollow bodies.

## Revendications

1. Tuyau en matière plastique à plusieurs couches, formé au moins des couches suivantes :
1. une couche à base d'une masse moulée en polyamide, et
2. une couche voisine de 1 à base d'une masse moulée en un mélange à base de :
a) de 97, 5 % à 50 % en poids de fluorure de polyvinylidène, et
b) de 2,5 à 50 % de copolymère d'acrylate dans lequel les couches sont assemblées l'une à l'autre solidement et dans lequel le copolymère d'acrylate du composant 2 b) possède au moins les éléments constitutifs de base suivants :
i) de 14 à 85 % en poids de : 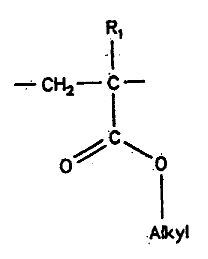
ii) de 0 à 75 % en poids de : 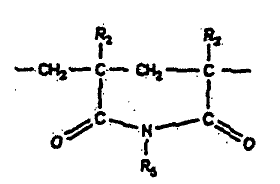
iii) de 0 à 15 % en poids de : 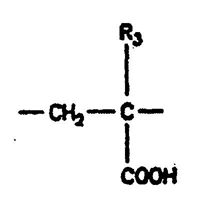
iv) de 7 à 20 % en poids de : 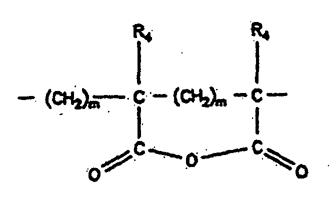
dans lesquels
m signifie 0 ou 1
alkyle signifie méthyle, éthyle, propyle, butyle, pentyle ou hexyle,
et R¹à R⁵ signifient H ou (Cₙ H₂ₙ₊₁) avec n = 1 à 6, et peuvent être identiques ou différents,
**caractérisé en ce que**
a) l'épaisseur de la couche 2 est choisie de telle sorte qu'elle représente de 2 à 40 % de l'épaisseur de paroi totale.
b) le polyamide de la couche 1 possède une viscosité relative nulle dans la plage de 1,65 à 2,4.

2. Tuyau en matière plastique à plusieurs couches conformément à la revendication 1,
**caractérisé en ce que**
la couche 2 consiste en un mélange à base de :
a) 97,5 à 80 % en poids de fluorure de polyvinylidène, et
b) de 2,5 à 20 % en poids de copolymère d'acrylate.

3. Tuyau en matière plastique à plusieurs couches conformément aux revendications 1 ou 2,
**caractérisé en ce que**
la couche 2 consiste en une masse moulée à base d'un mélange formé de :
a) de 96 à 90 % en poids de fluorure de polyvinylidène, et
b) de 4 à 10 % en poids de copolymère d'acrylate.

4. Tuyau en matière plastique à plusieurs couches conformément à l'une des revendications 1 à 3,
**caractérisé en ce que**
la couche 2bpossède les éléments constitutifs de base suivants :
i) de 35 à 70 % en poids de : 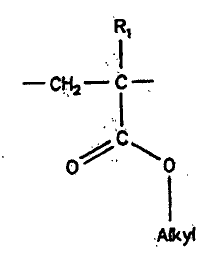
ii) de 10 à 75 % en poids - de préférence de 20 à 40 % en poids - de : 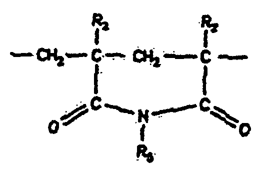
iii) de 0 à 15 % en poids de : 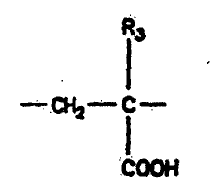
iv) de 8 à 12 % en poids de : 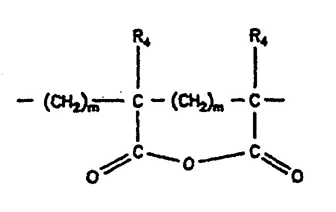
dans lesquelles m signifie 0 ou de préférence 1, alkyle = méthyle, éthyle, propyle, butyle, pentyle, hexyle, et R¹ à R⁵ signifient H ou (Cₙ H₂ₙ₊₁) avec n = 1 à 6, et peuvent être identiques ou différents.

5. Tuyau en matière plastique à plusieurs couches conformément à l'une des revendications 1 à 4,
**caractérisé en ce que**
la couche conformément à 1, représente une masse moulée à base de polyamide 12.

6. Tuyau en matière plastique à plusieurs couches conformément à l'une des revendications 1 à 5,
**caractérisé en ce que**
le reste alkyle ainsi que R¹ à R⁵ représentent un groupe méthyle.

7. Tuyau en matière plastique à plusieurs couches conformément à l'une des revendications 1 à 5,
**caractérisé en ce que**
le composant 2 renferme un copolymère de fluorure de vinylidène.

8. Tuyau en matière plastique à plusieurs couches conformément à l'une des revendications 1 à 7,
**caractérisé en ce que**
la couche 1 ou la couche 2 est ajustée conductrice de l'électricité et possède une résistance superficielle inférieure à 10⁹ Ω.

9. Tuyau en matière plastique à plusieurs couches conformément à l'une des revendications 1 à 8,
**caractérisé en ce que**
le composant 2 contient un fluorure de polyvinylidène ayant un indice de Melt-Flow (flux de fusion) inférieur à 17g/ 10 min et de préférence un fluorure de polyvinylidène ayant un indice de « Melt-Flow » de 2 à 13 g/ 10 min.

10. Tuyau en matière plastique à plusieurs couches conformément à l'une des revendications 1 à 9,
**caractérisé en ce qu'**
il contient plus d'une couche 1 et/ou **en ce qu'**il contient plus d'une couche 2.

11. Tuyau en matière plastique à plusieurs couches conformément à l'une des revendications 1 à 10,
**caractérisé en ce qu'**
il contient d'autres couches en fluorure de polyvinylidène qui sont voisines de la couche 2 mais pas de la couche 1.

12. Tuyau en matière plastique à plusieurs couches conformément à la revendication 11,
**caractérisé en ce que**
les autres couches en fluorure de polyvinylidène sont ajustées conductrices de l'électricité et possèdent une résistance superficielle inférieure à 10⁹ Ω.

13. Tuyau en matière plastique à plusieurs couches conformément à l'une des revendications 1 à 12,
**caractérisé en ce que**
la couche située à l'intérieur est ajustée conductrice de l'électricité et possède une résistance superficielle inférieure à 10⁹ Ω.

14. Tuyau en matière plastique à plusieurs couches conformément à l'une des revendications 1 à 13,
**caractérisé en ce qu'**
il contient en supplément aux couches 1 et 2 :
a) au moins une couche à base d'une polyoléfine, et
b) au moins une couche à base d'un adjuvant d'adhésion usuel pour des assemblages entre polyoléfine et polyamide,
disposés de telle sorte que la couche à base d'adjuvant d'adhésion b) se situe directement entre la couche 1 et la couche à base de polyoléfine a).

15. Utilisation de tuyau en matière plastique à plusieurs couches conformément à l'une des revendications 1 à 14, pour le transport de substances (pétro) chimiques.

16. Utilisation du tuyau en matière plastique à plusieurs couches conformément à l'une des revendications 1 à 14, en vue de la production de corps creux.

17. Tuyau en matière plastique à plusieurs couches conformément à l'une des revendications 1 à 14,
**caractérisé en ce qu'**
il constitue une conduite pour liquide de frein, liquide de refroidissement ou fluide hydraulique ou une conduite pour carburant.

18. Pièce en matière plastique à plusieurs couches produite à partir du tuyau en matière plastique à plusieurs couches, conformément à l'une des revendications 1 à 14,
**caractérisée en ce qu'**
elle constitue une tubulure de remplissage ou une cuve de réservoir.
